# FASCICULE DE BREVET EUROPEEN

(11) **EP 2 330 913 B1**
(45) Date de publication et mention de la délivrance du brevet: **08.07.2015**
(21) Numéro de dépôt: 09784282.7
(22) Date de dépôt: 21.07.2009
(51) Int. Cl.: A21D 13/00, A23L 1/00, A21D 13/08, A23P 1/08, A23P 1/12

(54) **PROCEDE DE FABRICATION D'UN PRODUIT ALIMENTAIRE EXTRUDE**
VERFAHREN ZUR HERSTELLUNG EINES EXTRUDIERTEN NAHRUNGSMITTELPRODUKTS
PROCESS FOR MAKING AN EXTRUDED FOOD PRODUCT

(30) Priorité: 01.08.2008 FR 0804433
(43) Date de publication de la demande: 15.06.2011
(73) Titulaire: Generale Biscuit, 94150 Rungis (FR)
(72) Inventeur: ERRAJI, Mohamed, F-94400 Vitry-sur-seine (FR); VENET, Véronique, F-91250 Saint Germain Les Corbeil (FR); PAGE, Edouard, F-91160 Longjumeau (FR)
(74) Mandataire: Boult Wade Tennant
(86) Numéro de dépôt international: PCT/FR2009/000896
(87) Numéro de publication internationale: WO 2010/012882

(56) Documents cités:
- EP-A- 1 483 969
- WO-A-2004/010793
- WO-A-2007/138790
- WO-A-2009/015171
- PYLER E.J.: "Baking science and technology" 1988, SOSLAND PUBLISHING , KANSAS CITY, USA , XP002517348 page 1021 - page 1025

## Description

La présente invention concerne un procédé de fabrication d'un produit alimentaire extrudé.

De nombreux produits de biscuiteries présentent des inclusions en surface, notamment des graines, des céréales, des fruits, du fromage-râpé ou des herbes, etc...

Dans le domaine des produits alimentaires extrudés tels que le produit vendu sous la marque « Cracotte », il n'existe pas actuellement de procédé permettant de revêtir le produit avec des inclusions et il n'existe pas sur le marché de pain plat extrudé (obtenu par cuisson extrusion) contenant des inclusions alors que les premiers pains plats extrudés (obtenus par cuisson extrusion) sont apparus à la fin des années 70.

Par contre, sur le marché des pains ou des biscottes, des produits contenant des inclusions sont assez courants.

Dans les procédés de cuisson-extrusion des pains plats extrudés, les matières premières sont entraînées dans l'extrudeur par un système de vis d'Archimède en rotation et subissent des forces de cisaillement et de compression importantes, associées à une montée en température et en pression.

En sortie de l'extrudeur, la matière première passe par une filière qui définit la forme du produit.

A la sortie de la filière, le différentiel de pression entre l'intérieur et l'extérieur induit la vaporisation de l'eau et une expansion qui confère une texture aérée au produit. Ce procédé rend difficile l'obtention de produits extrudés avec des inclusions.

L'ajout d'inclusion à la pâte en amont de l'extrudeur ne permet pas de conserver l'intégrité des inclusions. Comme il se produit une expansion importante de la pâte lors de l'extrusion, la fente d'extrusion de la filière est mince (hauteur de l'ordre de 1,5 mm à 2 mm) alors que la taille des inclusions (graines, morceaux de fruits, etc...) est au moins égale à 1 mm. Notamment, les graines exsudent du gras au moment du passage à travers la filière où la plupart d'entre elles sont déchiquetées, et il en résulte une texture très dure du produit.

L'invention a pour but de proposer un procédé permettant de déposer des inclusions à la surface d'un produit alimentaire extrudé sans modification des paramètres d'un procédé qui est à priori peu propice à l'obtention d'un tel résultat car il se caractérise par une vitesse élevée de défilement de la bande et par la présence de vibrations dans le sens vertical.

L'invention ne concerne pas les inclusions qui peuvent adhérer au support par elles-mêmes soit à température ambiante soit à l'état fondues telles que pépites de chocolat, caramel ou sucres fondues, fromages à l'état liquide ou semi-liquide qui colleraient par eux-mêmes au support sans aide d'un agent adhésif.

Dans le cadre de la panification ou de la biscotterie, l'ajout de céréales ou de graines en surface des produits se fait par simple dépose et enfoncement partiel à la surface des pâtons. La texture des pâtons est encore élastique et permet une adhésion des graines et/ou céréales facilitée par la cuisson qui va faire lever la pâte et figer cette adhésion. Cette méthode d'application ne peut être utilisée dans le cas de la présente invention car le produit est déjà cuit.

En biscuiterie, on peut utiliser le même principe que pour les pains ou biscottes pour l'ajout de céréales en surface d'un biscuit. En complément il est commun d'ajouter une dorure qui facilite l'adhésion de ces inclusions en surface du biscuit et qui donne une coloration dorée au biscuit. Cette méthode n'est pas applicable dans le cas où l'on recherche à obtenir un produit non coloré.

On peut citer le document WO2004/010793 qui décrit un procédé pour préparer un produit alimentaire du type biscuit ou cracker qui est recouvert d'une garniture. Après le dépôt de la garniture sur le produit, une couche de liaison est déposée sur le produit présentant la garniture.

Le document EP 1 483 969 décrit également un cracker recouvert d'une garniture.

L'article de Pyler "Baking science and technology" 1988, Sosland Publishing, Kansas City, USA divulgue le procédé de préparation des crackers et indique que ceux-ci comportent de la levure.

Enfin, le document WO 2007/138790 décrit la préparation de produits extrudés, lesquels ne comportent pas de levure.

La texture d'un pain plat obtenu par cuisson-extrusion ne permet pas une adhésion par simple dépose et enfoncement des inclusions à la surface du produit. Le produit a une texture peu élastique et peu adhérente car il est déjà cuit. Il n'est pas possible par simple dépose de faire adhérer des inclusions à sa surface. Il faudrait appliquer une pression telle que la texture du produit se modifierait complètement, le produit ne serait plus aéré et deviendrait très fin ce qui n'est pas le but recherché.

Dans le domaine des produits extrudés pour apéritif, l'ajout d'inclusion en surface se fait principalement par l'utilisation de matière grasse comme agent adhésif. La matière grasse liquide est pulvérisée en surface du produit extrudé le plus souvent dans un tambour. Les produits obtenus sont recouverts d'inclusions sur les deux faces. Ce procédé ne permet pas l'adhésion de grosses particules. Il est surtout utilisé pour faire adhérer des inclusions sous forme de poudre de taille inférieure à 500µ, en particulier des arômes.

Les différentes méthodes et procédés cités précédemment ne peuvent donc pas être utilisés dans le cadre de notre objectif qui est d'obtenir un produit alimentaire obtenu par cuisson-extrusion recouvert d'inclusions visibles et perceptibles.

Il n'existe actuellement pas de produit type pain plat extrudé-cuit recouvert d'inclusions visibles et perceptibles.

L'invention concerne aussi un procédé de fabrication d'un produit alimentaire extrudé, caractérisé en ce que pour le dépôt d'inclusions en surface, il comporte en aval d'au moins une filière d'extrusion produisant un ruban de pâte extrudé et expansé :
a) un dépôt surfacique d'au moins une couche d'une colle de type alimentaire à adhérence immédiate
b) un dépôt surfacique d'inclusions comprenant au moins un type d'inclusions
c) un séchage du ruban de pâte
d) un cassage de la pâte en pains extrudés individuels
e) un refroidissement des pains extrudés individuels
et en ce qu'il comprend avant a et entre b et c un laminage du ruban de pâte extrudée,
tel que revendiqué.

La mise en oeuvre d'une colle ayant un effet collant immédiat permet de manière surprenante une adhésion suffisante des inclusions à la surface de la bande en dépit de sa vitesse (de l'ordre de 50 m/minute pour le type de produit envisagé) et des vibrations de la bande extrudée qui en sortie de filière présente encore une certaine flexibilité.

Une étape de prédécoupe peut également être réalisée avant l'étape de dépôt surfacique a ou bien entre les étapes b et c, notamment en réalisant des lignes de prédécoupe transversales.

La colle peut être avantageusement à base d'au moins un hydrocolloïde, notamment de polysaccharide et plus particulièrement parmi les polysaccharides d'au moins un amidon et/ou d'un sirop de glucose, et/ou d'une maltodextrine et/ou bien encore à base de gomme de xanthane. Le ou les amidons ne sont de préférence pas des amidons modifiés chimiquement au sens de la directive CE n°95/2/EC.

Le procédé peut mettre en oeuvre la superposition d'un premier ruban de pâte extrudé et expansé recouvert d'inclusions par un deuxième ruban de pâte extrudé et expansé, recouvert ou non d'inclusions.

La filière d'extrusion peut présenter un profil dentelé pour former des stries sur la face supérieure de la bande sur laquelle sont déposées les inclusions.

La filière peut présenter un profil en U allongé pour former des bords relevés de part et d'autre du ruban de pâte extrudé et expansé.

Les inclusions peuvent comporter notamment des graines et/ou des céréales et/ou des morceaux de fruits et/ou du fromage en grain ou râpé à l'état solide et/ou des herbes. La plus grande dimension des inclusions peut être entre 1 mm et 10 mm, notamment entre 1 mm et 5 mm, et plus particulièrement entre 1 mm et 4 mm.

L'invention concerne également un produit susceptible d'être obtenu par le procédé tel que défini ci-dessus et comprenant un support sous forme de pain plat obtenu par cuisson-extrusion, une colle notamment à base d'hydrocolloïdes de préférence de polysaccharides ainsi que des inclusions visibles.

La colle est non grasse.

La colle peut être à base de maltodextrine et/ou de sirop de glucose et/ou d'amidon. Notamment, la colle est à base d'un sirop de glucose de dextrose équivalent compris entre 18 et 48, de préférence compris entre 20 et 40 et de préférence compris entre 20 et 23 et/ou à base d'une maltodextrine de dextrose équivalent inférieur ou égal à 20,-de préférence entre 5 et 10 et de préférence entre 4 et 8.

Les inclusions peuvent comporter des graines et/ou des céréales et/ou des morceaux de fruits et/ou du fromage en grain ou râpé à l'état solide et/ou des herbes, dont la plus grande dimension est comprise entre 1 mm et 10 mm, notamment entre 1 mm et 5 mm, et plus particulièrement entre 1 mm et 4 mm.

Le produit peut être caractérisé par les dimensions suivantes : longueur comprise entre 50 et 130 mm, largeur comprise entre 45 et 65 mm et épaisseur comprise entre 5 et 9 mm

D'autres caractéristiques et avantages de l'invention apparaîtront mieux à la lecture de la description ci-après, en liaison avec les dessins dans lesquels :
- la figure 1 est un schéma d'une ligne de fabrication selon l'invention ;
- la figure 2 représente un produit obtenu par le procédé selon l'invention respectivement en coupe (figure 2a) et en vue de dessus (figure 2b);

Le procédé met en oeuvre un dépôt surfacique de colle, notamment par pulvérisation, à l'aide d'un pulvérisateur à buses, la ou les buses étant réparties dans la largeur du produit. La colle comporte un ou plusieurs agents collants formant une solution pulvérisable.

La colle utilisée est non grasse. On peut utiliser comme agent collant la plupart des hydro- colloïdes qui ont un effet épaississant, stabilisant ou gélifiant qui en solution conduisent à former une solution ayant un effet adhésif. Les hydro colloïdes utilisables sont notamment d'une part les polysaccharides dont, les amidons et leurs dérivés, les pectines de fruits, les xanthanes, alginates, carraghénanes, les gommes de guar et d'autre part la gomme de caroube ainsi que les gélatines et les fibres solubles (FOS, Inuline peuvent être aussi classés avec les polysaccharides). Ces hydro colloïdes peuvent être utilisés seuls ou en association.

Plusieurs formulations de colle sont données ci-dessous à titre d'exemple:
- sirop de glucose déshydraté (équivalent dextrose ED = 21) ; la colle est obtenue en ajoutant 1 kg dudit produit déshydraté à 1 litre d'eau à 55° C.
- amidon modifié prégélatinisé ; la colle est obtenue en ajoutant 50 g d'amidon modifié prégélatinisé à 1 litre d'eau froide.
- amidon fluidifié à cuire ; la colle est obtenue en ajoutant 300 g d'amidon fluidifié à cuire à 1 litre d'eau froide.
- maltodextrine ; la colle est obtenue en ajoutant 260 g de maltodextrine à 1 litre d'eau froide.
- gomme de xanthane ; la colle est obtenue en ajoutant 6 g de gomme de xanthane à 1 litre d'eau froide.

Les colles mentionnées ci-dessus conduisent à des niveaux d'adhésion satisfaisants. Les amidons présentent toutefois l'inconvénient d'une coloration blanchâtre ou brunâtre qui n'est pas favorable à l'aspect du produit. L'amidon fluidifié ainsi donne le moins bon résultat du point de vue adhésion. Les meilleurs résultats sont ainsi obtenus avec le sirop de glucose, la gomme de xanthane et la maltodextrine. L'utilisation d'eau seule ne permet pas le collage des inclusions.

Les inclusions peuvent être des graines de pavot, de quinoa et/ou de millet (dimension entre 1 mm et 1,5 mm) et/ou de lin brun, de lin jaune, de sésame, des pignons de pin et/ou des brisures concassées de blé, d'avoine et/ou de seigle et/ou de sarrasin (dimension entre 1 mm et 4 mm) et/ou des flocons de blé, d'avoine, d'orge et/ou d'épeautre et/ou de seigle (dimension supérieure à 5 mm) et/ou des graines de tournesol, et/ou de courge des flocons d'avoine d'orge et/ou de blé (dimension de l'ordre de 8 mm) et/ou des morceaux de fromage râpé ou en grains (dimension entre 5 et 10 mm).

La capacité d'adhésion des graines est d'autant plus élevée que leurs dimensions sont réduites (par exemple les graines de pavot, de sésame ou de lin). Pour les flocons, l'adhésion est bonne car même si leurs dimensions peuvent être plus élevées que celles des graines, la relative planéité de leur surface est un facteur favorable à l'adhésion. Les graines de tournesol et de courge ont l'adhésion la plus faible du fait de leur taille et de leur forme bombée. De plus, nous avons observé que les graines de tournesol s'écrasent sous la pression des cylindres de laminage et perdent une partie de leur intégrité. En ce qui concerne les cubes de fruits, nous avons observé avec des brisures de framboise un encrassement des cylindres de laminage et du couteau de pré-découpe du fait de l'adhésion des brisures de framboises à leur surface au détriment du produit.

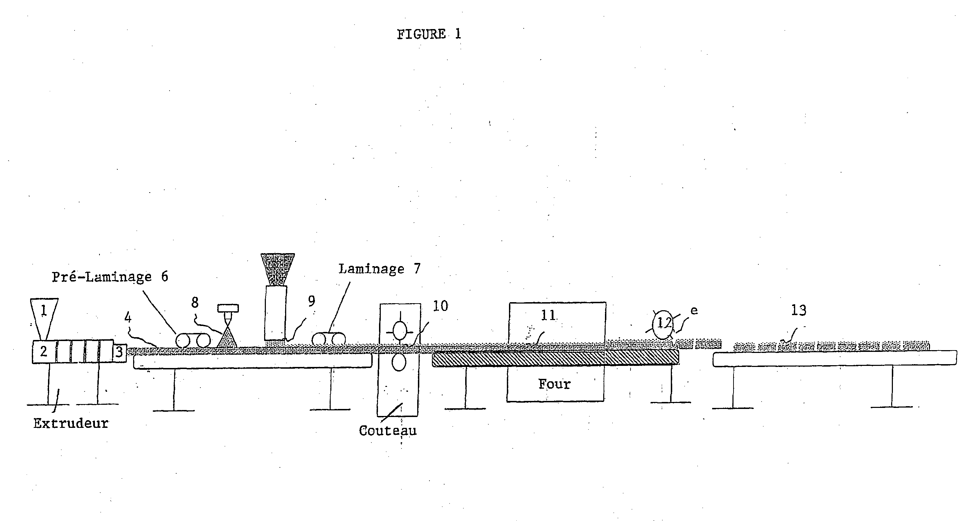

Le procédé, en référence à la figure 1, met en oeuvre les étapes suivantes :
- Mélange des poudres en 1 et alimentation du cuiseur-extrudeur 2.
- Cuisson et extrusion à travers une filière 3. Le produit sortant est formé sous forme d'un ruban continu 4 fortement expansé. Le ruban 4 sortant de la filière est guidé par un tapis 5.
- Guidage, pré-laminage et étirage à l'aide d'un ou plusieurs rouleaux cylindriques 6. Le pré-laminage permet de lisser la surface de la pâte extrudée, de la calibrer à une épaisseur donnée et de la rendre plane.
- Dépôt surfacique en 8 d'un film de colle de préférence par pulvérisation, en une ou deux couches.
- Dépôt des inclusions en 9 par exemple avec un doseur à vis sans fin.
- Laminage à l'aide d'un ou plusieurs rouleaux cylindriques 7. La distance entre les cylindres de laminage et la base extrudée est choisie pour exercer une force d'appui sur les inclusions pour renforcer leur adhésion à la surface de la pâte extrudée. La distance doit rester suffisante pour ne pas compresser le produit, ce qui modifierait significativement la texture initiale de la base extrudée. A cette étape, si la « croûte » extérieure du produit est déformable, il n'est pas possible de la déformer de manière permanente. Par contre, le coeur du produit conserve une certaine élasticité qui permet de réaliser cette opération de laminage sans dommage pour les inclusions. Cette élasticité disparaît lorsque le produit est séché et refroidi. Cette étape permet également de limiter les pertes d'inclusions du fait de la vitesse importante de défilement et des vibrations subie par la bande de pâte.
- Pré-découpe optionnelle notamment par formation des stries transversales sur la face supérieure de la bande à l'aide de couteaux 10 pour définir des pains extrudés individuels.
- Séchage par toastage léger dans un four 11 à infra-rouges (par exemple température moyenne du four 250 °C pendant par exemple 15 à 30 secondes). Cette étape permet de faire baisser l'humidité du produit et d'arriver à un taux d'humidité final compris entre 3 et 5%.
- Casse ou découpe en 12 en pains extrudés individuels.
- Refroidissement en 13 des pains extrudés individuels, notamment en vue de leur mise sous sachet.

Le procédé permet une répartition surfacique des inclusions sans formation d'agglomérats d'inclusions.

La forte adhérence que produit instantanément une colle liquide à adhérence immédiate permet, de par sa consistance sirupeuse, que les inclusions supportent aussi bien la vitesse du ruban extrudé que les vibrations verticales auxquelles est soumis le ruban qui présente une certaine flexibilité au sortir de l'extrudeur.

Ces vibrations verticales génèrent en effet un battement continuel du ruban avec une amplitude de quelques millimètres, qui tend à éjecter les inclusions déposées sur le ruban.

En aval, ces vibrations ne sont plus présentes car le ruban est guidé par le tapis et le sirop collant sèche progressivement ce qui augmente son pouvoir adhésif.

Le procédé peut classiquement s'intégrer dans une ligne qui comporte plusieurs sorties de pâtes extrudées.

Dans ce cas, il est possible de réaliser un sandwich comprenant un premier produit recouvert d'inclusions et un deuxième produit recouvert ou non d'inclusions.

A cet effet, on superpose deux rubans situés côte à côte en les guidant latéralement.

L'étape de laminage en aval est alors mise en oeuvre et permet de réaliser le sandwich.

### EXEMPLE

Des produits extrudés sont réalisés conformément à la figure 1. Une base extrudée est laminée puis est recouverte d'une couche de colle (8) puis recouverte d'inclusions (9) subie une autre étape de laminage avant d'être prédécoupée (10) puis séchée et toastée dans un four (11), ensuite les produits sont découpés en pains individuels (12) qui sont refroidis (13).

La base extrudée à la composition suivante (les proportions indiquées sont pondérales)

**Tableau 1 : Formule de la pâte ou base extrudée**

| Ingrédients | Quantité (%) |
|---|---|
| Farine de Blé | 87 |
| Blé Malté | 4 |
| Lactoserum en poudre | 3,5 |
| Sucre (saccharose) | 2,5 |
| Sel | 1,5 |
| Huile de palme | 1,5 |
| Total | 100 |

Excepté l'huile de palme, les ingrédients composant la base extrudée sont mélangés ensemble puis vont alimenter le cuiseur-extrudeur. L'huile de palme est injectée au niveau de l'extrudeur en continu à un dosage de 1,5%.

La colle a la composition suivante :

**Tableau 2 : Formule de la colle**

| Ingrédients | Quantité (%) |
|---|---|
| Sirop de Glucose déshydraté (ED= 21) | 50 |
| Eau chaude (55°C) | 50 |
| Total | 100 |

La colle obtenue selon la formule décrite dans le tableau 2 à un écoulement répondant à un comportement liquide newtonien et sa viscosité à 20°C est de 91mPa.s.

Le mélange d'inclusions a la composition suivante :

**Tableau 3 : Composition du mélange d'inclusions**

| Ingrédients | Quantité (%) |
|---|---|
| Graines de sésame décortiquées | 33 |
| Graines de lin brun | 33 |
| Flocons d'avoine baby | 33 |
| Total | 100 |

La base extrudée est obtenue en alimentant un cuiseur-extrudeur bivis (par exemple un modèle BC45 de Clextral) avec le mélange décrit dans le tableau 1 sans huile de palme. Le débit d'alimentation du mélange est compris entre 150 et 180 kg/h. L'huile de palme est ajoutée en continu pendant la phase de cuisson-extrusion. De la vapeur d'eau et/ou de l'eau est également ajoutée en continu pour favoriser la formation de bulles d'eau favorable à l'expansion. Le mélange est cuit puis est forcé dans une filière qui va conférer à la base une forme de section rectangulaire. La température de sortie de la base extrudée est comprise entre 180 et 190°C. A la sortie de la filière, le mélange cuit va s'expanser au contact de l'air et former une bande de pâte expansée. La vitesse de sortie de cette bande extrudée est comprise entre 45 et 50 m/minute. L'humidité de la base extrudée à la sortie de l'extrudeur est comprise entre 8,5 et 12%.

La bande extrudée est ensuite guidée et entrainée par un rouleau à bande pleine puis laminée à l'aide de 2 rouleaux cylindriques ((6) figure 1) qui vont appliquer une pression entre la bande et le tapis. Cela permet de calibrer l'épaisseur de la bande extrudée et de lui conférer une surface lisse et régulière.

Ensuite la colle préparée selon la formule définie dans le tableau 2 est pulvérisée sous forme d'un jet continu à la surface de la bande extrudée (8 - figure 1). Le taux de colle est compris entre 1,5 et 10 % et préférablement entre 3 et 5 %. (Pourcentage pour 100g de produit fini). La pulvérisation est réalisée de façon à obtenir une couche surfacique régulière et homogène recouvrant la base extrudée sur toute sa largeur. La colle est incolore, transparente et apporte un très léger goût sucré. L'humidité du produit obtenu (base extrudée + colle) est comprise entre 9,5 et 12,5 %.

A cette base extrudée recouverte de colle sera ajouté en continu le mélange d'inclusions préparé selon la formule décrite dans le tableau 3. Les inclusions sont dosées en continu à l'aide d'un doseur volumétrique monovis (9 - figure 1). Le dosage en continu permet d'obtenir un ratio base extrudée/inclusions constant. Les inclusions sont déposées de sorte à recouvrir la base extrudée recouverte de colle sur toute sa largeur. Le taux d'inclusions peut être compris entre 1,5 et 20% et préférablement entre 7,5 et 15%. L'ajout des inclusions a peu d'incidence sur l'humidité du produit fini.

Au contact de la base extrudée recouverte de colle, les inclusions vont adhérer de façon instantanée à la surface. Afin d'accentuer cette adhésion, une étape de laminage, à l'aide d'un ou plusieurs rouleaux cylindriques, est nécessaire (7 - figure 1). Ce laminage permet également d'obtenir une surface régulière et homogène et une calibration de l'épaisseur du produit.

Sur le tapis où sont réalisées les étapes de pulvérisation de colle et de dépose d'inclusions, un système de racloir peut être mis en place sur le tapis afin de récupérer les résidus de colle et de graines et éviter ainsi leur accumulation sur le tapis ce qui pourrait entrainer une perturbation du process. De même un système de pulvérisation d'air peut avantageusement être placé avant le passage de la base au niveau du couteau afin d'éliminer le surplus d'inclusions qui pourraient encrasser le couteau et nuir à son bon fonctionnement.

Le produit ainsi obtenu est prédécoupé par un couteau rotatif à lames (10 - figure 1).. Les lames vont marquer la face supérieure de la base extrudée à la longueur désirée (soit entre 115 et 120 mm).

- Après cette prédécoupe, le produit est entrainé par un tapis dans un four à infrarouges (11 - figure 1) qui va servir à sécher le produit pour l'amener à une humidité comprise entre 3 et 5% et qui va lui donner une coloration dorée naturelle. Le temps de séchage/toastage est compris entre 15 et 30 secondes à une température comprise entre 200 et 250°C. Le séchage du produit va augmenter l'adhésion des inclusions qui vont être figées à la surface de la base extrudée. La colle à base de sirop de glucose déshydraté subit une légère cristallisation qui peut se traduire par une légère coloration blanche mais cela est peu perceptible.

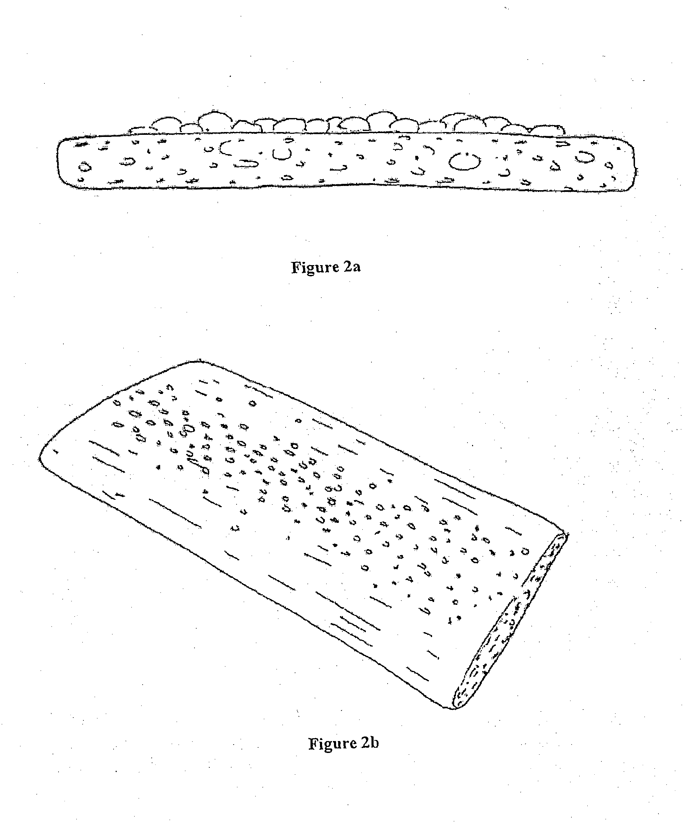

A la sortie du four, les produits sont ensuite cassés (12 - figure 1). pour être séparés en pains individuels qui sont refroidis à l'air libre (13 - figure 1). et qui peuvent par la suite être emballés. Le produit obtenu est conforme aux figures 2a et 2b. Il s'agit d'un produit extrudé, expansé recouvert de graines et céréales qui a une texture croustillante, craquante et fondante. Le produit ainsi obtenu peut être consommé tels quel ou tartiné.

La formule de la base extrudée peut être composée d'une ou plusieurs céréales qui peuvent être complètes.

Le mélange d'inclusions peut être composé d'une seule à plus de 3 graines et/ou céréales et/ou herbes et/ou fruits et/ou morceaux de fromage différents.

La colle peut aussi être remplacée par une maltodextrine de dextrose équivalent de préférence égal à 6 préparée en ajoutant 260 à 300 ml de cette maltodextrine à 1 litre d'eau.

## Revendications

1. Procédé de fabrication d'un produit alimentaire extrudé, **caractérisé en ce que** pour le dépôt d'inclusions en surface, il comporte en aval d'au moins une filière d'extrusion produisant un ruban de pâte extrudé, expansé et cuit, les étapes successives suivantes :
a) un dépôt surfacique d'au moins une couche d'une colle de type alimentaire à adhérence immédiate
b) un dépôt surfacique d'inclusions comprenant au moins un type d'inclusions
c) un séchage du ruban de pâte
d) un cassage ou une découpe du ruban de pâte en pains extrudés individuels
e) un refroidissement des pains extrudés individuels
**en ce qu'**il comprend avant a et entre b et c un laminage du ruban de pâte extrudée,
**en ce que** ledit au moins un type d'inclusions ne comprend pas les inclusions qui peuvent adhérer au support par elles-mêmes soit à température ambiante soit à l'état fondues telles que pépites de chocolat, caramel ou sucres fondues, fromages à l'état liquide ou semi-liquide qui colleraient par eux-mêmes au support sans aide d'un agent adhésif.

2. Procédé selon la revendication 1, **caractérisé en ce qu'**il comporte entre b et c, une prédécoupe du ruban de pâte pour définir les pâtons extrudés individuels.

3. Procédé selon une des revendications 1 ou 2, **caractérisé en ce que** ladite prédécoupe met en oeuvre la réalisation de lignes de pré-découpe transversales pour les pains extrudés individuels.

4. Procédé selon une des revendications précédentes, **caractérisé en ce que** la colle est à base d'au moins un hydrocolloïde, notamment de polysaccharide et plus particulièrement parmi les polysaccharides d'au moins un amidon et/ou d'un sirop de glucose, et/ou d'une maltodextrine.

5. Procédé selon une des revendications précédentes, **caractérisé en ce que** la colle est a base de gomme de xanthane.

6. Procédé selon une des revendications précédentes, **caractérisé en ce qu'**il met en oeuvre la superposition d'un premier ruban de pâte extrudé et expansé recouvert d'inclusions par un deuxième ruban de pâte extrudé et expansé.

7. Procédé selon une des revendications précédentes, **caractérisé en ce qu'**au moins une filière d'extrusion présente un profil dentelé pour former des stries sur une face supérieure de la bande.

8. Procédé selon une des revendications précédentes, **caractérisé en ce qu'**au moins une filière d'extrusion présente un profil en U allongé pour former des bords relevés de part et d'autre des rubans de pâte extrudé et expansé.

9. Procédé selon une des revendications précédentes, **caractérisé en ce que** les inclusions comportent des graines et/ou des céréales et/ou des morceaux de fruits et/ou des herbes et/ou morceaux de fromage.

10. Procédé selon une des revendications précédentes, **caractérisé en ce que** la plus grande dimension des inclusions est comprise entre 1 mm et 10 mm et notamment entre 1 mm et 5 mm et plus particulièrement entre 1mm et 4 mm.

11. Produit susceptible d'être obtenu par le procédé selon l'une des revendications précédentes comprenant un support sous forme de pain-plat obtenu par cuisson-extrusion, une colle notamment à base d'hydrocolloïdes de préférence de polysaccharides sur le support ainsi que, sur la colle, des inclusions visibles.

12. Produit selon une des revendications 11 ou 12 **caractérisé en ce que** la colle est à base de maltodextrine et/ou de sirop de glucose et/ou d'amidon

13. Produit selon la revendication 12 **caractérisé en ce que** la colle est à base d'un sirop de glucose de dextrose équivalent compris entre 18 et 48, de préférence compris entre 20 et 40 et de préférence compris entre 20 et 23

14. Produit selon la revendication 12 **caractérisé en ce que** la colle est à base d'une maltodextrine de dextrose équivalent inférieur ou égal à 20, de préférence entre 5 et 10 et de préférence entre 4 et 8.

15. Produit selon une des revendications 11 à 14 **caractérisé en ce qu'**il est recouvert d'inclusions comportant des graines et/ou des céréales et/ou des morceaux de fruits et/ou du fromage en grain ou râpé à l'état solide et/ou des herbes, dont la plus grande dimension est comprise entre 1 mm et 10 mm, notamment entre 1 mm et 5 mm, et plus particulièrement entre 1 mm et 4 mm.

16. Produit selon une des revendications 11 à 15 **caractérisé par** les dimensions suivantes : longueur comprise entre 50 et 130 mm, largeur comprise entre 45 et 65 mm et épaisseur comprise entre 5 et 9 mm

## Patentansprüche

1. Verfahren zur Herstellung eines extrudierten Nahrungsmittelerzeugnisses, **dadurch gekennzeichnet, dass** es zum Anordnen von Einschlüssen an einer Oberfläche stromabwärts von wenigstens einer Extrusionsdüse, welche ein Band aus extrudiertem, gequollenem und gebackenem Teig erzeugt, die folgenden Schritte umfasst:
a) ein oberflächliches Anordnen wenigstens einer Schicht von Klebstoff vom Lebensmitteltyp zur sofortigen Haftung,
b) ein oberflächliches Anordnen von Einschlüssen, welche wenigstens einen Typ von Einschlüssen umfassen,
c) ein Trocknen des Teigbands,
d) ein Brechen oder ein Schneiden des Teigbands in einzelne extrudierte Brote,
e) ein Kühlen der einzelnen extrudierten Brote,
dass es vor a und zwischen b und c ein Auswalzen des extrudierten Teigbands umfasst,
dass der wenigstens eine Typ von Einschlüssen keine Einschlüsse umfasst, die von selbst an der Unterlage anhaften können, weder bei Umgebungstemperatur noch im geschmolzenen Zustand, wie beispielsweise Stückchen von Schokolade, Karamell oder geschmolzenem Zucker, Käse in flüssigem oder halbflüssigem Zustand, die von selbst ohne Verwendung eines Klebemittels an der Unterlage ankleben würden

2. Verfahren nach Anspruch 1, **dadurch gekennzeichnet, dass** es zwischen b und c ein Vorschneiden des Teigbands umfasst, um einzelne extrudierte Teiglinge zu definieren.

3. Verfahren nach einem der Ansprüche 1 oder 2, **dadurch gekennzeichnet, dass** das Vorschneiden das Erzeugen von transversalen Vorschnitt-Linien für die einzelnen extrudierten Brote umfasst.

4. Verfahren nach einem der vorhergehenden Ansprüche, **dadurch gekennzeichnet, dass** der Klebstoff auf wenigstens einem Hydrokolloid, insbesondere einem Polysaccharid, und weiter insbesondere aus den Polysacchariden auf wenigstens einer Stärke oder/und einem Glukosesirup oder/und einem Maltodextrin basiert.

5. Verfahren nach einem der vorhergehenden Ansprüche, **dadurch gekennzeichnet, dass** der Klebstoff auf Xanthangummi basiert.

6. Verfahren nach einem der vorhergehenden Ansprüche, **dadurch gekennzeichnet, dass** es das Überlagern eines ersten mit Einschlüssen bedeckten Teiglings aus extrudiertem und gequollenem Teig mit einem zweiten Teigling aus extrudiertem und gequollenem Teig umfasst.

7. Verfahren nach einem der vorhergehenden Ansprüche, **dadurch gekennzeichnet, dass** wenigstens eine Extrusionsdüse ein gezahntes Profil aufweist, um Riefen auf einer oberen Fläche des Bands zu bilden.

8. Verfahren nach einem der vorhergehenden Ansprüche, **dadurch gekennzeichnet, dass** wenigstens eine Extrusionsdüse ein längliches U-Profil aufweist, um auf beiden Seiten des extrudierten und gequollenen Teigbands angehobene Ränder zu bilden.

9. Verfahren nach einem der vorhergehenden Ansprüche, **dadurch gekennzeichnet, dass** die Einschlüsse Körner oder/und Cerealien oder/und Fruchtstücke oder/und Kräuter oder/und Käsestücke umfassen.

10. Verfahren nach einem der vorhergehenden Ansprüche, **dadurch gekennzeichnet, dass** das größte Ausmaß der Einschlüsse zwischen 1 mm und 10mm, insbesondere zwischen 1 mm und 5 mm und weiter insbesondere zwischen 1 mm und 4 mm liegt.

11. Erzeugnis, welches geeignet ist, mittels des Verfahrens nach einem der vorhergehenden Ansprüche erhalten zu werden, umfassend eine Unterlage in Form eines Fladenbrots, welches durch Back-Extrusion erhalten wird, einen Klebstoff, insbesondere auf Grundlage von Hydrokolloiden, vorzugsweise Polysacchariden, auf der Unterlage, sowie auf dem Klebstoff sichtbare Einschlüsse.

12. Erzeugnis nach einem der Ansprüche 11 oder 12, **dadurch gekennzeichnet, dass** der Klebstoff auf Maltodextrin oder/und Glukosesirup oder/und Stärke basiert.

13. Erzeugnis nach Anspruch 12, **dadurch gekennzeichnet, dass** der Klebstoff auf einem Glukosesirup mit einem Dextrose-Äquivalent zwischen 18 und 48 basiert, vorzugsweise zwischen und 20 und 40 und weiter vorzugsweise zwischen 20 und 23.

14. Erzeugnis nach Anspruch 12, **dadurch gekennzeichnet, dass** der Klebstoff auf einem Maltodextrin mit einem Dextrose-Äquivalent von kleiner oder gleich 20 basiert, vorzugsweise zwischen 5 und 10 und weiter vorzugsweise zwischen 4 und 8.

15. Erzeugnis nach einem der Ansprüche 11 bis 14, **dadurch gekennzeichnet, dass** es mit Einschlüssen bedeckt ist, welche Körner oder/und Cerealien oder/und Fruchtstücke oder/und Käse als Korn oder gerieben im festen Zustand oder/und Kräuter umfasst, von welchen das größte Ausmaß zwischen 1 mm und 10 mm, insbesondere zwischen 1 mm und 5 mm und weiter insbesondere zwischen 1 mm und 4 mm liegt.

16. Erzeugnis nach einem der Ansprüche 11 bis 15, **gekennzeichnet durch** die folgenden Abmessungen: Länge zwischen 50 und 130 mm, Breite zwischen 45 mm und 65 mm und Dicke zwischen 5 und 9 mm.

## Claims

1. Method for producing an extruded food product, **characterised in that**, in order to deposit inclusions on the surface, said method comprises, downstream of at least one extrusion die producing an extruded, expanded and cooked strip of dough, the following successive steps:
a) depositing on the surface at least one layer of a food-grade adhesive that adheres instantly;
b) depositing on the surface inclusions comprising at least one type of inclusion;
c) drying the strip of dough;
d) breaking or cutting the strip of dough into individual extruded breads;
e) cooling the individual extruded breads; and
**in that** said method comprises, before a) and between b) and c), rolling the strip of extruded dough,
**in that** said at least one type of inclusion does not comprise inclusions which can adhere to the support by themselves either at ambient temperature or in the melted state such as chocolate chips, caramel or melted sugars, cheeses in the liquid or semi-liquid state which would stick by themselves to the support without the help of an adhesive agent.

2. Method according to claim 1, **characterised in that**, between b) and c), it comprises pre-cutting the strip of dough to define individual extruded dough pieces.

3. Method according to either claim 1 or claim 2, **characterised in that** said pre-cutting implements the production of transverse pre-cut lines for the individual extruded breads.

4. Method according to any of the preceding claims, **characterised in that** the adhesive is based on at least one hydrocolloid, in particular polysaccharide and more particularly from polysaccharides of at least a starch and/or a glucose syrup and/or a maltodextrin.

5. Method according to any of the preceding claims, **characterised in that** the adhesive is based on xanthan gum.

6. Method according to any of the preceding claims, **characterised in that** it implements the superimposition of a second extruded and expanded strip of dough on a first extruded and expanded strip of dough which is covered with inclusions.

7. Method according to any of the preceding claims, **characterised in that** at least one extrusion die has a serrated profile for forming ridges on an upper face of the strip.

8. Method according to any of the preceding claims, **characterised in that** at least one extrusion die has an elongate U-shaped profile for forming edges that are raised on either side of the extruded and expanded strips of dough.

9. Method according to any of the preceding claims, **characterised in that** the inclusions comprise seeds and/or grains and/or pieces of fruit and/or herbs and/or pieces of cheese.

10. Method according to any of the preceding claims, **characterised in that** the largest dimension of the inclusions is in the range of from 1 mm to 10 mm and in particular in the range of from 1 mm to 5 mm and more particularly in the range of from 1 mm to 4 mm.

11. Product that may be obtained by the method according to any of the preceding claims, comprising a support in the form of a flatbread which is obtained by extrusion cooking, an adhesive which is in particular based on hydrocolloids, preferably polysaccharides, on the support, and, on the adhesive, visible inclusions.

12. Product according to either claim 11 or claim 12, **characterised in that** the adhesive is based on maltodextrin and/or glucose syrup and/or starch.

13. Product according to claim 12, **characterised in that** the adhesive is based on glucose syrup having a dextrose equivalent in the range of from 18 to 48, preferably in the range of from 20 to 40 and preferably in the range of from 20 to 23.

14. Product according to claim 12, **characterised in that** the adhesive is based on a maltodextrin having a dextrose equivalent of 20 or less, preferably in the range of from 5 to 10 and preferably in the range of from 4 to 8.

15. Product according to any of claims 11 to 14, **characterised in that** the product is covered with inclusions comprising seeds and/or grains and/or pieces of fruit and/or cheese, which is either powdered or grated in the solid state, and/or herbs, the largest dimension thereof being in the range of from 1 mm to 10 mm, in particular in the range of from 1 mm to 5 mm, and more particularly in the range of from 1 mm to 4 mm.

16. Product according to any of claims 11 to 15, **characterised in that** it has the following dimensions: a length in the range of from 50 mm to 130 mm, a width in the range of from 45 mm to 65 mm, and a thickness in the range of from 5 mm to 9 mm.
